# FASCICULE DE BREVET EUROPEEN

(11) **EP 4 217 235 B1**
(45) Date de publication et mention de la délivrance du brevet: **04.09.2024**
(21) Numéro de dépôt: 21748924.4
(22) Date de dépôt: 05.07.2021
(51) Int. Cl.: B60R 1/00

(54) **PROCÉDÉ ET DISPOSITIF D'ACTIVATION D'UNE FONCTION SOUMISE À AUTORISATION DANS UN VÉHICULE COMPRENANT UN SYSTÈME DE RÉTROVISEURS NUMÉRIQUES**
VERFAHREN UND VORRICHTUNG ZUR AKTIVIERUNG EINER AUTORISIERUNGSRELEVANTEN FUNKTION IN EINEM FAHRZEUG MIT EINEM SYSTEM AUS DIGITALEN RÜCKSPIEGELN
METHOD AND DEVICE FOR ACTIVATING A FUNCTION SUBJECT TO AUTHORIZATION IN A VEHICLE COMPRISING A SYSTEM OF DIGITAL REAR-VIEW MIRRORS

(30) Priorité: 22.09.2020 FR 2009583
(43) Date de publication de la demande: 02.08.2023
(73) Titulaire: Stellantis Auto SAS, 78300 Poissy (FR)
(72) Inventeur: MOREAU, Charles, 78120 RAMBOUILLET (FR); BAYARD, Loic, 91940 LES ULIS (FR); QUINIO, Pierre, 78000 VERSAILLES (FR); ELEDUT, Eric, 92290 CHATENAY MALABRY (FR); SAVIGNAC, Maxime, 78000 VERSAILLES (FR)
(86) Numéro de dépôt international: PCT/FR2021/051224
(87) Numéro de publication internationale: WO 2022/064111

(56) Documents cités:
- EP-A1- 2 822 814
- DE-A1- 102013 016 341
- FR-A1- 3 035 073
- US-A1- 2018 312 114

## Description

La présente invention revendique la priorité de la demande française 2009583 déposée le 22.09.2020.

Le domaine de l'invention est celui de l'interface homme machine d'un véhicule et plus particulièrement les interactions avec un système de rétroviseurs numériques.

Il est connu d'équiper un véhicule automobile d'un ou de plusieurs rétroviseurs numériques comportant un écran affichant des images de l'environnement extérieur capturées par des caméras. Ces dispositifs commencent à remplacer les rétroviseurs traditionnels à miroir réfléchissant disposés de part et d'autre des portières avant, gauche et droite.

Le document EP 2 822 814 décrit un véhicule comprenant un rétroviseur numérique, notamment un rétroviseur extérieur et/ou latéral, qui comporte au moins un écran tactile affichant des images capturées par une caméra disposée à l'extérieur du véhicule. Un paramètre de représentation du dispositif d'affichage, notamment la luminosité et/ou le contraste et/ou un paramètre de couleur, est réglable sur l'écran tactile.

Ces nouveaux réglages de fonctions dédiées au rétroviseurs numériques s'ajoutent aux autres réglages de fonctions du véhicule et en particulier aux fonctions soumise à autorisation, déjà existants. Cela entraine également une interface supplémentaire d'interaction avec les utilisateurs. Cette multiplicité d'interfaces contribue à l'augmentation des coûts de fabrication du véhicule par l'ajout de nombreux composants (boutons, câblages, ...). Cette multiplicité contribue également à une complexité d'utilisation pour les utilisateurs.

Un objet de la présente invention est de proposer une solution pour simplifier l'activation d'une fonction soumise à autorisation dans un véhicule tout en réduisant le coût de fabrication du véhicule.

Elle propose plus précisément à cet effet un procédé d'activation d'une fonction soumise à autorisation dans un véhicule comprenant un système de rétroviseurs numérique. Ledit véhicule comprend un côté conducteur et un côté passager, et comprend des organes aptes à fournir au moins une fonction soumise à autorisation. Ledit système de rétroviseurs numériques comprenant au moins :
- un premier écran tactile, disposé du côté conducteur, dédié à l'affichage de l'environnement extérieur du côté conducteur ;
- un deuxième écran tactile, disposé du côté passager avant, dédié à l'affichage de l'environnement extérieur du côté passager.

Ledit procédé comprend les étapes suivantes :
- détection par un desdits organes d'une action d'une personne nécessitant l'activation d'une fonction soumise à autorisation,
- émission, dudit organe vers le système de rétroviseurs numériques, d'informations relatives à la ladite détection,
- réception, dudit système de rétroviseurs numériques, des informations relatives à la ladite détection provenant dudit organe,
- affichage, sur l'un desdits écrans tactiles, d'une notification comportant, ladite fonction soumise à autorisation et, une zone d'interaction apte à recevoir soit un accord soit un refus du conducteur et/ou du passager avant.

Ainsi, lorsqu'un usager souhaite activer une fonction soumise à autorisation, par exemple une ouverture d'une fenêtre arrière par un enfant, il agit sur un organe associé à la fonction soumise à autorisation, par exemple la bouton d'ouverture de ladite fenêtre. Cet organe, apte détecter une demande d'activation, émet la demande vers le système de rétroviseurs numérique qui affiche sur l'un desdits écrans tactiles, une notification comportant, ladite fonction soumise à autorisation et, une zone d'interaction apte à recevoir soit un accord soit un refus du conducteur et/ou du passager avant. Le conducteur et/ou le passager avant peuvent alors accepter ou refuser simplement la demande. Cela évite au conducteur d'activer l'autorisation sur un bouton, souvent peu accessible en conduite. De plus ce bouton n'est généralement pas accessible par le passager avant qui ne peut pas alors donner l'autorisation et décharger cette tâche au conducteur. Dans les cas où l'activation de ladite fonction est disponible via une interface d'un ordinateur de bord, l'accès à cette activation n'est pas facile : il faut le retrouver dans l'arborescence des menus.

Avantageusement, le procédé comporte en outre une étape d'acquisition d'une commande du conducteur et/ou du passager avant sur ledit écran tactile, une étape d'émission, du système de rétroviseurs numériques vers ledit organe, d'informations relatives à l'interaction entre le conducteur et/ou le passager avant avec ledit écran tactile. Lorsque l'information émise comporte un accord, ledit organe active la fonction.

Ainsi, très simplement, le conducteur et/ou le passager avant, après interaction avec l'écran tactile du système de rétroviseurs numériques permet de donner l'autorisation et activer ladite fonction.

Avantageusement, ledit organe est un ouvrant, un système multimédia, un système de réglage de la climatisation.

On entend par ouvrant tout organe du véhicule qui s'ouvre, donc qui possède au moins deux positions, une fermée et une ouverte (partiellement ouverte, déployée, ou allumée). Par exemple, sans être limitatif, un ouvrant est un élément parmi une porte, une fenêtre, un coffre, un capot, un couvercle ou trappe fermant un espace de rangement (par exemple une boîte à gants), un airbag, une ceinture de sécurité, un éclairage ...

L'invention appliquée à plusieurs fonctions soumises à autorisation, permet des demandes d'autorisation et des acceptations ou refus très simplement, le transfert de la demande se faisant par les organes concernés.

Avantageusement, la fonction soumise à autorisation est une ouverture, une fermeture, un réglage de niveau et/ou de position, un réglage de vitesse, une activation, et/ou une extinction.

L'invention appliqué à plusieurs fonctions soumises à autorisation, permet des demandes d'autorisation et des acceptations ou refus très simplement, la demande ainsi que la zone d'interaction étant affichées sur au moins un écran tactile du système de rétroviseur numérique facilement accessible au conducteur et/ou un passager avant.

Avantageusement, l'affichage de la notification est du côté conducteur ou passager selon que l'organe est du côté conducteur ou passage du véhicule.

Ainsi, la personne la plus concernée est notifiée et peut donner un accord ou un refus.

Avantageusement, lequel le procédé comporte en outre les étapes de détermination d'une phase de vie du véhicule à partir de données du véhicule, et de suspendre l'affichage selon la phase de vie déterminée.

Dans certaines phases de vie, ou situation vie, par exemple en cas de manoeuvre de dépassement du véhicule initié par le conducteur, il est utile de ne pas afficher, ou de suspendre temporairement, les notifications.

Avantageusement, dans un mode de réalisation, l'affichage est en filigrane ou en marge de l'image. Dans certaines phases de vie, il est utile que l'affichage sur les écrans tactiles du système de rétroviseur numérique concerne principale la rétrovision. Dans d'autres phases de vie, par exemple en parking, l'affichage de la notification et de la zone d'interaction peut être plus prépondérante que celui de l'affichage de la rétrovision.

L'invention concerne aussi un dispositif qui comprend une mémoire associée à au moins un processeur configuré pour mettre en oeuvre le procédé.

L'invention concerne aussi un véhicule qui comporte le dispositif.

L'invention concerne aussi un programme d'ordinateur qui comprend des instructions adaptées pour l'exécution des étapes du procédé lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig 1] illustre schématiquement un véhicule comprenant un dispositif de rétroviseurs numériques selon un exemple de réalisation particulier de la présente invention ;
[Fig 2] illustre schématiquement un procédé d'activation d'une fonction soumise à autorisation dans un véhicule comprenant un système de rétroviseurs numériques, selon un exemple de réalisation particulier de la présente invention.
[Fig. 3] illustre schématiquement un dispositif d'activation d'une fonction soumise à autorisation dans un véhicule comprenant un système de rétroviseurs numériques, selon un exemple particulier de réalisation de la présente invention.
[Fig 4] illustre schématiquement un premier exemple d'affichage d'un écran du système de rétroviseurs numériques selon des exemples de réalisation particulière de la présente invention.
[Fig 5] illustre schématiquement un deuxième exemple d'affichage d'un écran du système de rétroviseurs numériques selon des exemples de réalisation particulière de la présente invention.

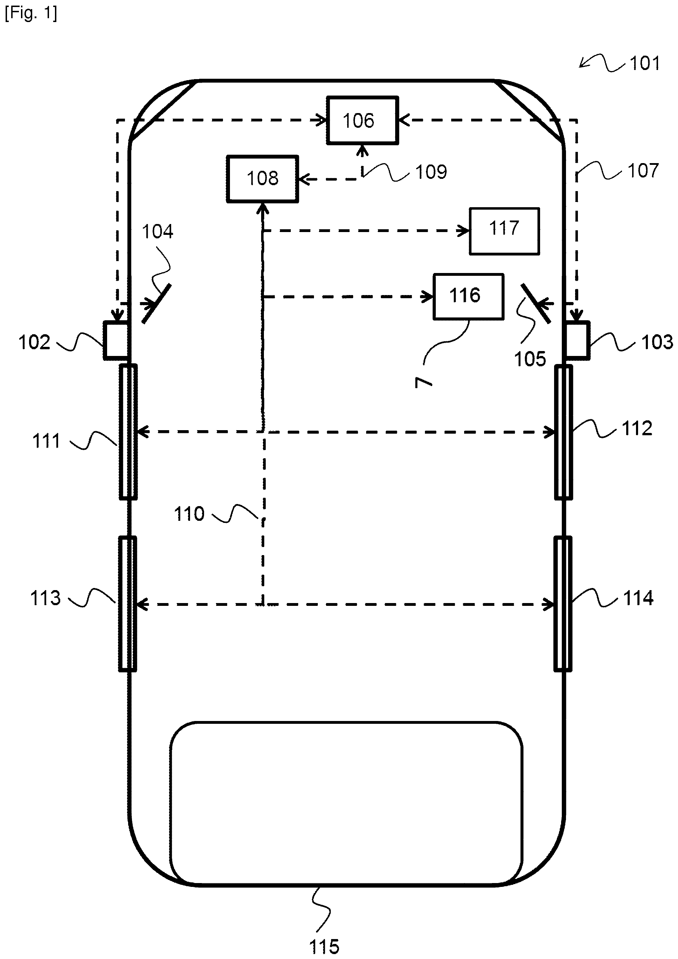

La **figure 1** montre un véhicule 101 comportant un système de rétroviseur numérique. Le véhicule comporte un côté conducteur et un côté passager. Le système de rétroviseur numérique comprend au moins une caméra 102, 103 capturant des images de l'extérieur du véhicule, un premier écran tactile 104 disposé du côté conducteur, un deuxième écran tactile 105 disposé du côté passager, et un calculateur 106. Un canal de communication 107, par exemple un réseau CAN, relie ces composants.

Dans le mode de réalisation de la figure 1, le véhicule comporte une première caméra, 102, du côté conducteur, et une comporte une deuxième caméra, 103, du côté passager.

Dans un autre mode de réalisation non illustré, le véhicule comporte une seule caméra avantageusement placé sur le toit permettant de capturer des images de l'environnement extérieur du véhicule.

Le calculateur 106 peut être également relié à un second calculateur 108 à l'aide d'un second canal de communication 109. Le second calculateur 108, à l'aide d'un troisième canal de communication 110, peut être relié à des organes pilotant des fonctions de confort et/ou de sécurité. Ces fonctions peuvent être soumises à autorisation.

Le réglage de fonctions de confort et/ou de sécurité permet à un utilisateur régler des fonctions d'un ouvrant. On entend par ouvrant tout organe du véhicule qui s'ouvre, donc qui possède au moins deux positions, une fermée et une ouverte (partiellement ouverte, déployée, ou allumée). Par exemple, sans être limitatif, un ouvrant est un élément parmi une porte ou une fenêtre 111, 112, 113, 114, un coffre 115, un capot, un couvercle ou trappe fermant un espace de rangement (par exemple une boîte à gants), un airbag 116, une ceinture de sécurité, un éclairage ... Le réglage de fonctions de confort et/ou de sécurité permet également à un utilisateur régler des fonctions d'un système multimédia (exemple le lancement d'une vidéo et/ou d'une audio, l'ambiance sonore ...), d'un système de réglage de la climatisation (exemple température, ventilation ...), ...

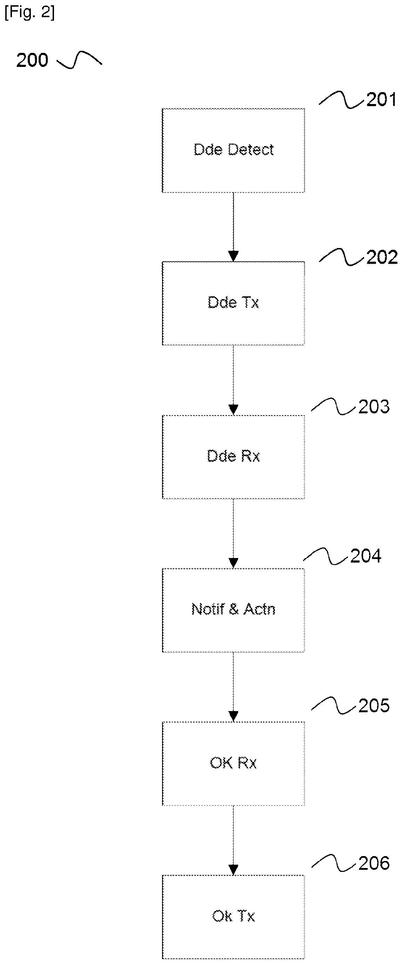

La **figure 2** illustre schématiquement un procédé 200 d'activation d'une fonction soumise à autorisation dans un véhicule comprenant un système de rétroviseurs numériques, selon un exemple de réalisation particulier de la présente invention.

L'étape 201, Dde Dtect, est une étape de détection par un des organes (sans être limitatif 113, 114, 115, 116) aptes à fournir au moins une fonction soumise à autorisation, d'une action d'une personne nécessitant l'activation d'une fonction soumise à autorisation, Par exemple, dans un mode opératoire, un enfant veut ouvrir sa porte arrière droite 114 en manipulant la poignée de la porte. Dans cet exemple, l'organe est la porte arrière ou plus particulièrement le calculateur PDCP, Platine De Commande de Porte, et par défaut pour des raisons de sécurité, la fonction d'ouverture des portes arrières 113, 114 est interdite.

Dans l'étape 202, Dde Tx, l'organe, qui a détecté une action nécessitant l'activation d'une fonction soumise à autorisation, transmet vers le système de rétroviseurs numériques des informations relatives à la ladite détection. En reprenant l'exemple ci-dessus, le PDPC transmet des informations relatives à la détection de demande d'ouverture de la porte arrière droite.

Dans l'étape 203, Dde Rx, le système de rétroviseurs numériques, ou tout autre dispositif qui a en charge de mettre en oeuvre le procédé reçoit informations relatives à la ladite détection. En reprenant l'exemple ci-dessus, le système de rétroviseurs numériques reçoit les informations relatives à la détection de demande d'ouverture de la porte arrière droite.

Dans l'étape 204, Notif & Actn, le système de rétroviseurs numériques affiche, sur au moins un des écrans tactiles du système de rétroviseurs numériques, une notification et une zone d'interaction apte à recevoir soit un accord soit un refus du conducteur et/ou du passager avant. Avantageusement, la notification comporte un message indiquant la demande d'autorisation de la fonction à activer. En reprenant l'exemple ci-dessus, le système de rétroviseurs numériques peut afficher le message sur l'écran tactile du côté du passager avant 105 : « Autoriser vous l'ouverture de la porte arrière droite ? », et également afficher une zone d'interaction avec deux case, une comprenant le message « OUI », l'autre comprenant le message « NON ».

Dans l'étape 205, Rx OK, le système de rétroviseurs numériques surveille la zone d'interaction et acquiert une commande du conducteur et/ou du passager avant sur ledit écran tactile. En reprenant l'exemple ci-dessus, le passager clique sur la zone d'interaction sur la partie « OUI ». Le système de rétroviseurs numériques acquiert l'information d'autorisation de la fonction d'ouverture de porte arrière droite.

Dans l'étape 206, Tx OK, le système de rétroviseurs numériques émet vers ledit organe, des informations relatives à l'interaction entre le conducteur et/ou le passager avant avec ledit écran tactile. En reprenant l'exemple ci-dessus, le message transmet l'information d'autorisation de la fonction d'ouverture de porte arrière droite. Ainsi, le PDCP à réception des informations, peut activer la fonction d'ouverture de porte et la porte s'ouvre alors.

Dans un mode opératoire, la détection par un des organes d'une action d'une personne nécessitant l'activation d'une fonction soumise à autorisation, est une détection d'une demande d'ouverture, de fermeture, de réglage de niveau et/ou de position, de réglage de vitesse, d'activation, et/ou d'extinction. Les informations relatives à la ladite détection, comprennent une ouverture, une fermeture, un réglage de niveau et/ou de position, un réglage de vitesse, une activation, et/ou une extinction.

Dans un autre mode opératoire, si un adulte est détecté sur la place du passage avant, les demandes d'activation d'une fonction soumise à autorisation sont affichées sur l'écran tactile du passager avant.

Dans un autre mode opératoire, l'affichage peut être suspendu selon la phase de vie du véhicule détecté. Par exemple, en cas de dépassement, de marche arrière, de changement de voie, ..., le procédé évitera d'afficher une notification. Dans un autre exemple, si le véhicule circule en mode autonome, c'est-à-dire sans action nécessaire de la part d'un conducteur pour conduire le véhicule, les notifications peuvent être affichés dans les phases de vies cités dans l'exemple précédent. Dans d'autre exemple, l'affichage sera très succinct, peu visible par le conducteur car l'affichage sera en filagramme ou marge de l'image.

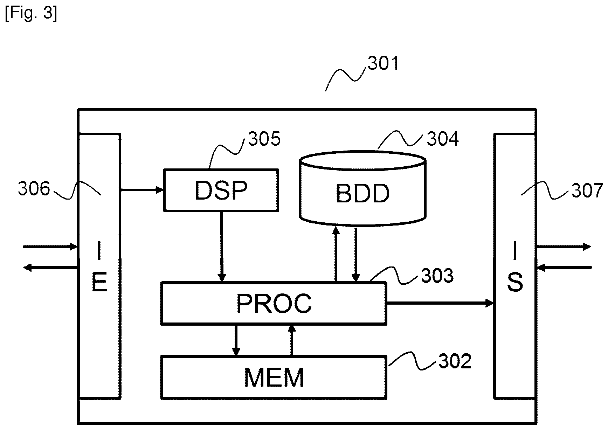

La **figure 3** représente un exemple de dispositif 301 compris dans le véhicule, dans un réseau (« cloud ») ou dans un serveur. Ce dispositif 301 peut être utilisé en tant que dispositif centralisé en charge d'au moins certaines étapes du procédé décrit ci-avant en référence à la figure 2. Dans un mode de réalisation, il correspond à un calculateur du système de rétroviseurs numériques.

Dans la présente invention, le dispositif 301 est compris dans le véhicule.

Ce dispositif 301 peut prendre la forme d'un boitier comprenant des circuits imprimés, de tout type d'ordinateur ou encore d'un téléphone mobile (« smartphone »).

Le dispositif 301 comprend une mémoire vive 302 pour stocker des instructions pour la mise en oeuvre par un processeur 303 d'au moins une étape du procédé tel que décrit ci-avant. Le dispositif comporte aussi une mémoire de masse 304 pour le stockage de données destinées à être conservées après la mise en oeuvre du procédé.

Le dispositif 301 peut en outre comporter un processeur de signal numérique (DSP) 305. Ce DSP 305 reçoit des données pour mettre en forme, démoduler et amplifier, de façon connue en soi ces données.

Le dispositif 301 comporte également une interface d'entrée 306 pour la réception des données mises en oeuvre par le procédé selon l'invention et une interface de sortie 307 pour la transmission des données mises en oeuvre par le procédé selon l'invention.

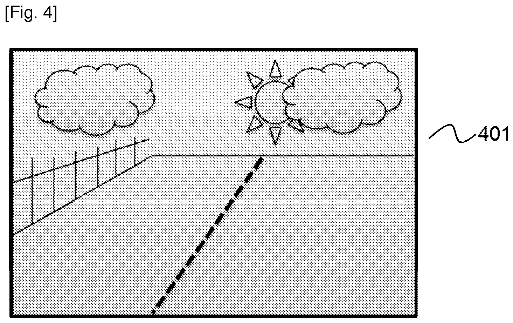

La **figure 4** illustre schématiquement une vue 401 de l'écran tactile côté conducteur en l'absence de détection d'une action nécessitant l'activation d'une fonction soumise à autorisation. L'écran affiche au moins une partie de l'image capturée par au moins une des caméras 102, 103.

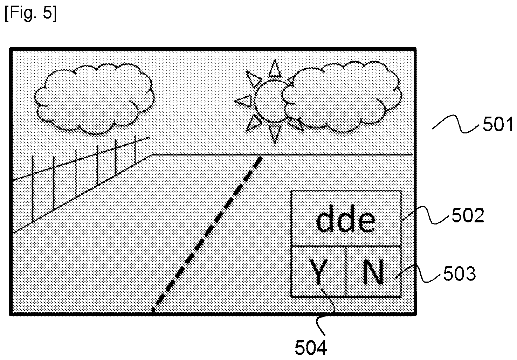

La **figure 5** illustre schématiquement une vue 501 de l'écran tactile côté conducteur lors de l'affichage d'une notification 502 comportant une fonction soumise à autorisation et une zone d'interaction apte à recevoir soit un accord 504 soit un refus 503 du conducteur.

Ainsi, on a décrit ci-avant un mode de réalisation dans lequel la transmission d'informations relatives à la ladite détection et/ou l'émission d'informations relatives à l'interaction entre le conducteur et/ou le passager avant avec un écran tactile étaient assurée par un lien filaire selon un protocole CAN. Bien sûr, ces transmissions peuvent être assurées par tout type de technique de communication telle que des communications optiques ou radiofréquences selon d'autres protocoles.

## Revendications

1. Procédé d'activation d'une fonction soumise à autorisation dans un véhicule (101) comprenant un système de rétroviseurs numériques, ledit véhicule (101) comprenant un côté conducteur et un côté passager, et comprenant des organes aptes à fournir au moins une fonction soumise à autorisation, ledit système de rétroviseurs numériques comprenant au moins :
• un premier écran tactile (104), disposé du côté conducteur, dédié à l'affichage de l'environnement extérieur du côté conducteur,
• un deuxième écran tactile (105), disposé du côté passager avant, dédié à l'affichage de l'environnement extérieur du côté passager,
ledit procédé comprenant les étapes suivantes :
• détection (201) par un desdits organes d'une action d'une personne nécessitant l'activation d'une fonction soumise à autorisation,
• émission (202), dudit organe vers le système de rétroviseurs numériques, d'informations relatives à la ladite détection,
• réception (203), dudit système de rétroviseurs numériques, des informations relatives à la ladite détection provenant dudit organe,
• affichage (204), sur l'un desdits écrans tactiles, d'une notification comportant ladite fonction soumise à autorisation et, une zone d'interaction apte à recevoir soit un accord soit un refus du conducteur et/ou du passager avant.

2. Procédé selon la revendication 1 dans lequel ledit procédé comporte en outre les étapes suivantes :
• acquisition (205) d'une commande du conducteur et/ou du passager avant sur ledit écran tactile,
• émission (206), du système de rétroviseurs numériques vers ledit organe, d'informations relatives à l'interaction entre le conducteur et/ou le passager avant avec ledit écran tactile,
lorsque l'information émise comporte un accord, ledit organe active la fonction.

3. Procédé selon l'une des revendications 1 à 2, dans lequel ledit organe est un ouvrant, un système multimédia, ou un système de réglage de la climatisation.

4. Procédé selon l'une des revendications 1 à 3, dans lequel ladite fonction soumise à autorisation est une ouverture, une fermeture, un réglage de niveau et/ou de position, un réglage de vitesse, une activation, et/ou une extinction.

5. Procédé selon l'une des revendications 1 à 4, dans lequel l'affichage de la notification est du côté conducteur ou passager selon que l'organe est du côté conducteur ou passage du véhicule.

6. Procédé selon l'une des revendications 1 à 5, dans lequel le procédé comporte en outre les étapes de :
- détermination d'une phase de vie du véhicule à partir de données du véhicule,
- suspendre l'affichage selon la phase de vie déterminée.

7. Procédé selon l'une des revendications 1 à 6, ladite affichage est en filigrane ou en marge de l'image.

8. Dispositif d'activation d'une fonction soumise à autorisation dans un véhicule comprenant un système de rétroviseurs numériques, ledit dispositif comprenant une mémoire associée à au moins un processeur configuré pour mettre en oeuvre le procédé selon l'une des revendication 1 à 7.

9. Véhicule comportant le dispositif selon la revendication 8.

10. Programme d'ordinateur comprenant des instructions adaptées pour l'exécution des étapes du procédé selon l'une des revendications 1 à 7 lorsque ledit programme est exécuté par au moins un processeur.

## Patentansprüche

1. Verfahren zur Aktivierung einer genehmigungspflichtigen Funktion in einem Fahrzeug (101) mit einem digitalen Spiegelsystem, wobei das Fahrzeug (101) eine Fahrerseite und eine Beifahrerseite umfasst und Elemente umfasst, die mindestens eine genehmigungspflichtige Funktion bereitstellen können, wobei das digitale Spiegelsystem mindestens Folgendes umfasst:
• einen ersten Touchscreen (104), der sich auf der Fahrerseite befindet und dazu bestimmt ist, die äußere Umgebung auf der Fahrerseite anzuzeigen,
• einen zweiten Touchscreen (105), der sich auf der Beifahrerseite befindet und der Anzeige der äußeren Umgebung auf der Beifahrerseite dient,
wobei das Verfahren die folgenden Schritte umfasst:
• Erkennen (201) einer Handlung einer Person durch eines dieser Organe, die die Aktivierung einer erlaubnispflichtigen Funktion erfordert,
• Übertragung (202) von Informationen im Zusammenhang mit der Erkennung vom Organ zum digitalen Spiegelsystem,
• Empfang (203) von Informationen bezüglich der genannten Erkennung, die von dem genannten Körper stammen, von dem genannten digitalen Spiegelsystem,
• Anzeige (204) einer Benachrichtigung auf einem der Touchscreens, die die genehmigungspflichtige Funktion und eine Interaktionszone umfasst, in der entweder eine Zustimmung oder eine Ablehnung vom Fahrer und/oder Beifahrer entgegengenommen werden kann.

2. Verfahren nach Anspruch 1, wobei das Verfahren weiterhin die folgenden Schritte umfasst:
• Erfassen (205) eines Befehls vom Fahrer und/oder Beifahrer auf dem Touchscreen,
• Übertragung (206) von Informationen über die Interaktion zwischen dem Fahrer und/oder dem Beifahrer mit dem Touchscreen vom digitalen Spiegelsystem an die Karosserie,
Wenn die übermittelten Informationen eine Vereinbarung enthalten, aktiviert das besagte Organ die Funktion.

3. Verfahren nach einem der Ansprüche 1 bis 2, bei dem das Element eine Öffnung, ein Multimediasystem oder eine Klimaanlagensteuerung ist.

4. Verfahren nach einem der Ansprüche 1 bis 3, bei dem die genehmigungspflichtige Funktion ein Öffnen, ein Schließen, eine Niveau- und/oder Positionsanpassung, eine Geschwindigkeitsanpassung, eine Aktivierung und/oder eine Löschung ist.

5. Verfahren nach einem der Ansprüche 1 bis 4, bei dem die Anzeige der Benachrichtigung auf der Fahrer- oder Beifahrerseite erfolgt, je nachdem, ob sich das Mitglied auf der Fahrer- oder Beifahrerseite des Fahrzeugs befindet.

6. Verfahren nach einem der Ansprüche 1 bis 5, wobei das Verfahren weiterhin die Schritte umfasst:
- Bestimmung einer Fahrzeuglebensphase anhand von Fahrzeugdaten,
- Unterbrechen Sie die Anzeige entsprechend der ermittelten Lebensphase.

7. Verfahren nach einem der Ansprüche 1 bis 6, wobei die Anzeige als Wasserzeichen oder am Rand des Bildes erfolgt.

8. Vorrichtung zur Aktivierung einer berechtigungspflichtigen Funktion in einem Fahrzeug mit einem digitalen Spiegelsystem, wobei die Vorrichtung einen Speicher umfasst, der mindestens einem Prozessor zugeordnet ist, der zur Durchführung des Verfahrens nach einem der Ansprüche 1 bis 7 konfiguriert ist.

9. Fahrzeug umfassend die Vorrichtung nach Anspruch 8.

10. Computerprogramm mit Anweisungen, die zur Ausführung der Schritte des Verfahrens nach einem der Ansprüche 1 bis 7 geeignet sind, wenn das Programm von mindestens einem Prozessor ausgeführt wird.

## Claims

1. Method for activating a function subject to authorization in a vehicle (101) comprising a digital mirror system, said vehicle (101) comprising a driver's side and a passenger's side, and comprising members capable of providing at least one function subject to authorization, said digital mirror system comprising at least:
• a first touch screen (104), located on the driver's side, dedicated to displaying the external environment on the driver's side,
• a second touch screen (105), located on the front passenger side, dedicated to displaying the external environment on the passenger side,
said method comprising the following steps:
• detection (201) by one of said organs of an action of a person requiring the activation of a function subject to authorization,
• transmission (202), from said organ to the digital mirror system, of information relating to said detection,
• reception (203), from said digital mirror system, of information relating to said detection coming from said body,
• display (204), on one of said touch screens, of a notification comprising said function subject to authorization and, an interaction zone capable of receiving either an agreement or a refusal from the driver and/or the front passenger.

2. Method according to claim 1 wherein said method further comprises the following steps:
• acquisition (205) of a command from the driver and/or front passenger on said touch screen,
• transmission (206), from the digital mirror system to said body, of information relating to the interaction between the driver and/or the front passenger with said touch screen,
when the information transmitted includes an agreement, said organ activates the function.

3. Method according to one of claims 1 to 2, in which said member is an opening, a multimedia system, or an air conditioning control system.

4. Method according to one of claims 1 to 3, in which said function subject to authorization is an opening, a closing, a level and/or position adjustment, a speed adjustment, an activation, and/or an extinction .

5. Method according to one of claims 1 to 4, in which the display of the notification is on the driver or passenger side depending on whether the member is on the driver or passenger side of the vehicle.

6. Method according to one of claims 1 to 5, in which the method further comprises the steps of:
- determination of a vehicle life phase based on vehicle data,
- suspend the display according to the determined life phase.

7. Method according to one of claims 1 to 6, said display is a watermark or in the margin of the image.

8. Device for activating a function subject to authorization in a vehicle comprising a digital mirror system, said device comprising a memory associated with at least one processor configured to implement the method according to one of claims 1 to 7 .

9. Vehicle comprising the device according to claim 8.

10. Computer program comprising instructions adapted for the execution of the steps of the method according to one of claims 1 to 7 when said program is executed by at least one processor.
